Europäisches Patentamt

European Patent Office

Office européen des brevets

(11) Publication number: **0 456 952 A1**

# EUROPEAN PATENT APPLICATION

(21) Application number: 90830326.6

(22) Date of filing: 13.07.90

(51) Int. Cl.⁵: **B60J 1/20**

(30) Priority: **15.05.90 IT 2117990 U**

(43) Date of publication of application:
**21.11.91 Bulletin 91/47**

(84) Designated Contracting States:
**AT BE CH DE DK ES FR GB GR LI LU NL SE**

(71) Applicant: **COMBICAR S.r.l.**
**Quartiere Artigianale, Stazione No. 8**
**I-29010 Alseno(IT)**

(72) Inventor: **Masotti, Domenico, C/o Combicar**
**S.r.l.**
**Quartiere Artigianale Stazione No. 8**
**I-29018 Alseno, (Piacenza)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Gutter rain shield for motor vehicles.**

(57) There is disclosed a gutter rain shield (1) for motor vehicles comprising a shaped section member (2) made of a flexible material and the cross section of which is provided with a flat edge therefrom a wing profiled member (5) extends, to the flat edge an autoadhesive material layer being applied.

FIG. 1

The present invention relates to a gutter rain shield for motor vehicles.

There are already known rain shields for motor vehicles and the like, which comprise a body made of a rigid optically transparent or shaded plastic material body applied at the frame of the window door.

These shields must be applied by using screws and small plates and, accordingly, by comparatively long and tedious operations.

Another drawback of known rain shields for motor vehicles is that these shields must be specifically designed and sized for each type of motor vehicle.

Yet another drawback of known rain shields for motor vehicles is that they can not be generally applied at the rear side windows of the motor vehicle.

## SUMMARY OF THE INVENTION

Accordingly, the aim of the present invention is to overcome the above mentioned drawbacks, by providing a gutter rain shield for motor vehicles which can be easily applied to any types of motor vehicles without using screws or special tools.

Within the scope of the above mentioned aim, a main object of the present invention is to provide such a gutter rain shield for motor vehicles which can also be applied to the rear side windows of the motor vehicle and is adapted to provide a good air exchange with the compartment of the motor vehicle so as to eliminate the so-called direct air blade.

Yet another object of the present invention is to provide such a gutter rain shield for motor vehicles which does not obstruct the window space so as to provide a full visibility from the motor vehicle compartment.

According to one aspect of the present invention, the above mentioned aim and objects, as well as yet other objects, which will become more apparent hereinafter, are achieved by a gutter rain shield for motor vehicles characterized in that said shield comprises a flexible material shaped section or profiled member the cross-section of which is provided with a flat edge therefrom a wing profiled element extends, an autoadhesive material layer being applied to said flat edge.

## BRIEF DESCRIPTION OF THE DRAWINGS

Further characteristics and advantages of the invention will become more apparent from the following detailed disclosure of a gutter rain shield for motor vehicles, being illustrated, by way of an indicative but not limitative example, in the accompanying drawings, where:

Figure 1 is a schematic perspective view of a gutter rain shield according to the invention applied on a motor vehicle;

Figure 2 is a cross-sectional view of the rain shield applied to a window frame;

Figure 3 is a cross-sectional view showing a gutter rain shield according to the invention applied to a motor vehicle body, near a window thereof;

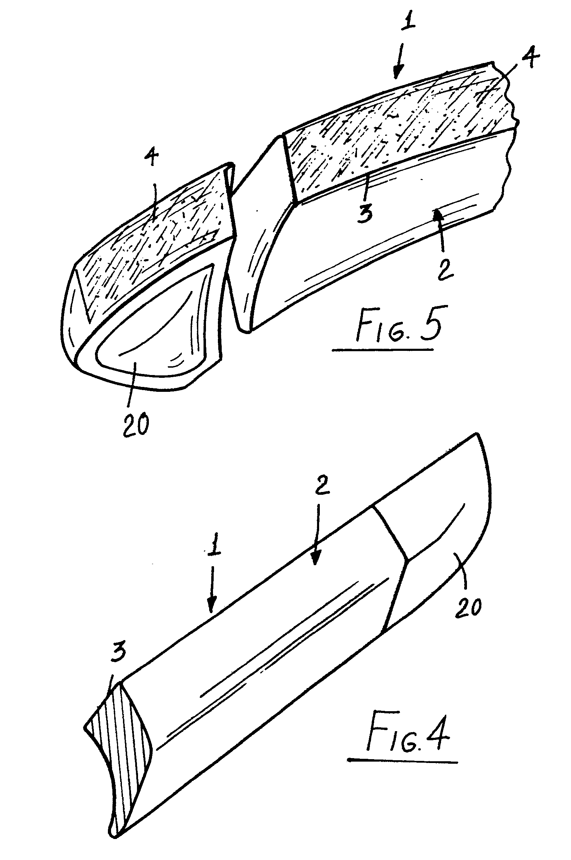

Figure 4 is a cross-sectioned perspective view of the subject gutter rain shield; and

Figure 5 is another perspective view showing the subject gutter rain shield as seen in the direction of its flat edge provided with an autoadhesive material and in which there is specifically shown the end element thereof.

## BRIEF DESCRIPTION OF THE PREFERRED EMBODIMENT

With reference to the figures of the accompanying drawings, the gutter rain shield for motor vehicles according to the present invention, which has been indicated overally at the reference number 1, comprises a shaped section or profiled element 2 which, advantageously, is made of a flexible material such as rubber, plastic material and the like.

This section element 2 is provided with a flat edge 3, thereon there is arranged an autoadhesive material layer 4 which is protected by a conventional strip element which can be removed at the application time.

From the flat edge of the profiled element 2 there extends a wing profiled element 5 which is downward tapered and has an overall width from 2 to 4 centimeters.

Owing to the disclosed arrangement, the profiled element 2 can be easily applied on the periphery of a side window of the motor vehicle, both on a front and a rear window, so as to operate as a shield both for the rain and the air.

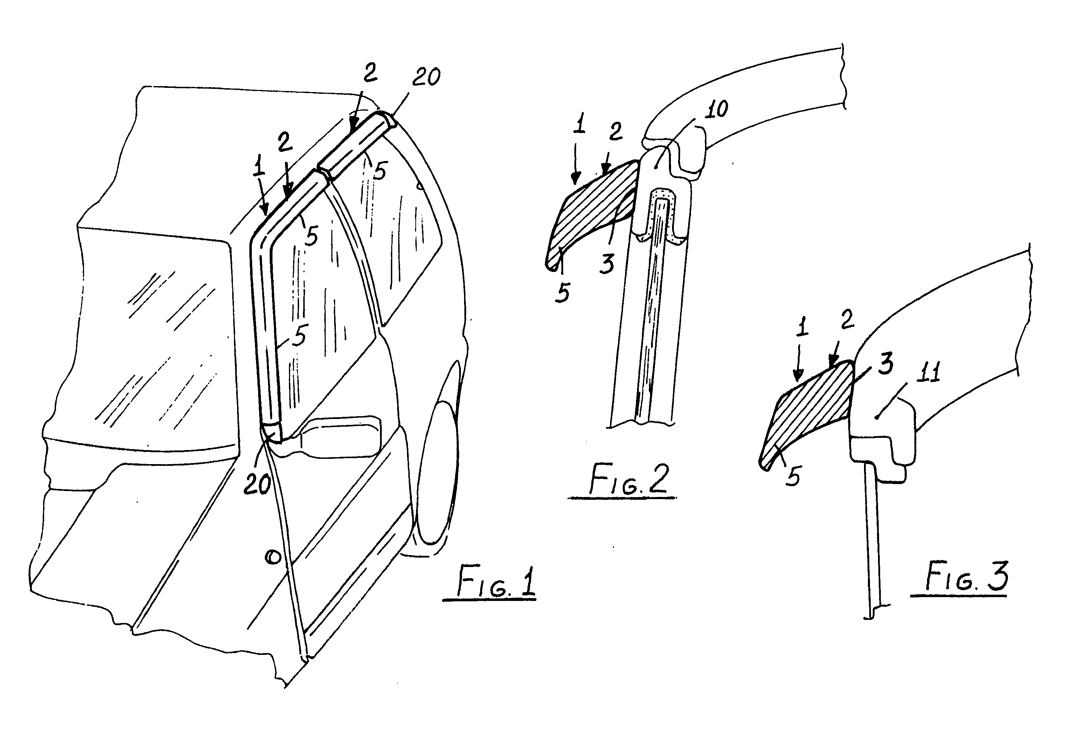

As is clearly shown in figure 2, the profiled element can be applied either on the frame 10 of a side window or, if desired, in the case of a very small frame, it can be directly applied on the body or roof 11 near the region in which the window is provided.

A main feature of the present invention is that the mentioned profiled element, which can be directly cut to size by the user, can be applied both on the front window and on a rear window, thereby providing a confortable ride also for the persons occupying the rear seats of the motor vehicle.

In this connection it should be pointed out that end portions are also provided, indicated at 20, which are adapted to be fitted to the cross section of the profiled element and which are tapered so as to improve both the aesthetical aspect and the operating characteristics of the shield since any projecting portions have been removed.

Also the end portions 20 are provided with the mentioned autoadhesive material layer.

From the above disclosure it should be apparent that the invention fully achieves the intended aim and objects.

In particular, the fact is to be pointed out that a gutter rain shield has been provided which has a very reduced size and which, however, affords the possibility of holding the side glasses open by some centimeters so as to satisfactorily exchange the compartment air even in the case of a strong rain, since the rain shield will operate as a rain gutter.

The subject rain shield, moreover, allows outside air to enter the compartment in a very smooth way thereby eliminating the so-called direct air blade susceptible to generate great turbulences in the motor-vehicle compartments.

Another important feature of the invention is that the subject rain shield, owing to its very reduced size, provides a full visibility from the motor vehicle compartment since it does not extend in any appreciable degree on the side glasses as it occurs with conventional motor vehicle rain shields.

While the invention has been disclosed and illustrated with reference to a preferred embodiment thereof, it should be apparent that the disclosed embodiment is susceptible to many modifications and variations all of which will come within the spirit and scope of the appended Claims.

## Claims

1. A gutter rain shield for motor vehicles, characterized in that said shield comprises a flexible material shaped section or profiled member the cross-section of which is provided with a flat edge there-from a wing profiled element extends, an autoadhesive material layer being applied to said flat edge.

2. A gutter rain shield for motor vehicles according to Claim 1, characterized in that said profiled element is so designed and arranged as to cross both the front side windows and the rear side windows of said motor vehicle.

3. A gutter rain shield for motor vehicles according to the preceding Claims, characterized in that said profiled element is tapered toward its downward facing free edge so as to operate as a gutter for discharging outside the rain.

4. A gutter rain shield for motor vehicles according to one or more of the preceding Claims, characterized in that said rain shield comprises end portions which can be arranged as an extension of said profiled element end portion and are adapted to provide a tapering arrangement.

5. A gutter rain shield for motor vehicles according to one or more of the preceding Claims, characterized in that said profiled element is adapted to be fitted to the frame of a side window of said motor vehicle.

6. A gutter rain shield for motor vehicles according to one or more of the preceding Claims, characterized in that said profiled element can be applied to the body of said motor vehicle at the region thereof in which the side windows are provided.

Fig. 1

Fig. 2

Fig. 3

_Fig. 5_

_Fig. 4_

# EUROPEAN SEARCH REPORT

European Patent Office

Application number

EP 90830326.6

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| Y | <u>DE - A - 1 802 853</u> (DAIMLER-BENZ AG) * Totality * | 1 | B 60 J 1/20 |
| X |  | 2,3,6 |  |
| Y | <u>DE - A - 2 135 997</u> (BLOSER) * Fig. 1; claim 2 * | 1 |  |
| A | <u>DE - A1 - 3 735 182</u> (PLAVA KUNSTSTOFFE GMBH) * Totality * | 1,2,3 5 |  |

TECHNICAL FIELDS SEARCHED (Int Cl⁵)

B 60 J
B 60 R

The present search report has been drawn up for all claims

| Place of search | Date of completion of the search | Examiner |
|---|---|---|
| VIENNA | 25-04-1991 | SCHMICKL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82